# EUROPÄISCHE PATENTSCHRIFT

(11) **EP 1 401 627 B1**
(45) Veröffentlichungstag und Bekanntmachung des Hinweises auf die Patenterteilung: **22.03.2006**
(21) Anmeldenummer: 02742748.3
(22) Anmeldetag: 15.05.2002
(51) Int. Cl.: B29C 45/17, F04B 23/02

(54) **HYDRAULIKAGGREGAT**
HYDRAULIC UNIT
GROUPE HYDRAULIQUE

(30) Priorität: 03.07.2001 DE 10131750
(43) Veröffentlichungstag der Anmeldung: 31.03.2004
(73) Patentinhaber: Bosch Rexroth AG, 70184 Stuttgart (DE)
(72) Erfinder: DANTLGRABER, Jörg, 97816 Lohr (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2002/001741
(87) Internationale Veröffentlichungsnummer: WO 2003/004242

(56) Entgegenhaltungen:
- EP-A- 1 052 408
- DE-A- 2 413 691
- DE-A- 19 612 582
- DE-U- 29 503 117
- PATENT ABSTRACTS OF JAPAN vol. 2000, no. 07, 29. September 2000 (2000-09-29) -& JP 2000 117799 A (NISSEI PLASTICS IND CO), 25. April 2000 (2000-04-25)

## Beschreibung

Die Erfindung betrifft ein Hydraulikaggregat gemäß dem Oberbegriff des Patentarispruchs 1.

Trotz der zunehmenden Verwendung von elektrisch betriebenen Kunststoffverarbeitungsmaschinen, insbesondere von Spritzgießmaschinen, werden bei großen Schußgewichten und den damit verbundenen hohen Zuhaltekräften immer noch hydraulisch betätigte Maschinen bevorzugt. Maschinen dieser Bauart zeichnen sich durch eine äußerst robuste Technik aus, wobei die hydraulischen Elemente vergleichsweise geringe Anforderungen an die Wartung stellen.

In der CH 547 139 PS ist ein Hydraulikaggregat für eine Spritzgießmaschine offenbart, bei der ein Druckmittel-Tank in den Maschinenfuß der Spritzgießmaschine integriert ist. Zur Geräuschdämmung befindet sich die Pumpe des Hydraulikkreislaufes innerhalb des Tanks, wobei die Einbauposition knapp oberhalb des Druckmittelpegels liegt. Ein Befestigungsflansch der Pumpe erstreckt sich durch eine Ausnehmung einer Seitenwandung und ist mit einem außen liegenden elektrischen Antriebsmotor verbunden.

Es zeigte sich, daß auch bei einer derartigen Konstruktion noch erhebliche Geräuschemissionen auftreten können. Üblicherweise werden bei den bekannten Konstruktionen luftgekühlte Antriebsmotoren verwendet. Beim Aufsetzen einer Dämmhaube wird dann die Kühlung behindert, so daß ein erheblicher Aufwand mit einem Schalllabyrinth betrieben werden muß.

Das Dokument DE-A-2413691 offenbart ein Hydraulikaggregat gemäß dem Oberbegriff des Anspruchs 1.

Demgegenüber liegt der Erfindung die Aufgabe zugrunde, ein Hydraulikaggregat zu schaffen, das bei einfachem Aufbau eine geringe Geräuschemission aufweist.

Diese Aufgabe wird durch ein Hydraulikaggregat mit den Merkmalen des Patentanspruchs 1 gelöst.

Erfindungsgemäß hat das Hydraulikaggregat einen in einem Maschinenfuß angeordneten Druckmitteltank, wobei der vergleichsweise laute Antrieb der Pumpe als geschlossene Antriebseinheit innerhalb des Tanks angeordnet ist, so daß eine optimale Geräuschdämmung gewährleistet ist. Bei der erfindungsgemäßen Lösung ist die Pumpe außerhalb des Tanks angeordnet, so daß deren Wartung erheblich vereinfacht ist.

Der Antrieb der Pumpe wird vorzugsweise zumindest abschnittsweise vom Druckmittel umgeben, so daß eine hervorragende Kühlung des Antriebsmotors durch das Druckmittel gewährleistet ist.

Ein wesentlicher Nachteil der eingangs beschriebenen Lösung besteht darin, daß sowohl der Antrieb als auch die Pumpe an der Seitenwandung befestigt sind. Diese Seitenwandung muß daher mit einer hinreichenden Festigkeit ausgebildet sein, um die vom Antrieb und der Pumpe übertragenen Schwingungen aufnehmen zu können und das erhebliche Gewicht dieser Komponenten abzustützen.

Dieser Nachteil wird bei einem vorteilhaften Ausführungsbeispiel der Erfindung dadurch überwunden, daß außerhalb des Tanks eine Konsole vorgesehen ist, über die sowohl der Antrieb als auch die Pumpe am Maschinenbett abgestützt werden, so daß die Tankwandung mechanisch nur gering belastet ist. Diese Wandung kann dann in optimaler Weise an ihre Dämmaufgabe angepaßt werden.

Vorzugsweise werden sowohl der Tank als auch die Konsole elastisch gelagert, so daß eine Schwingungsübertragung verringert wird.

Besonders vorteilhaft ist es, den Antriebsmotor ölgekühlt auszuführen.

Die Geräuschemission läßt sich weiter vermindern, wenn eine Umwälzpumpe für einen Kühl- und Filterkreislauf ebenfalls in dem Tank angeordnet wird.

Die Pumpen- und Antriebsachse kann in Horizontalrichtung oder in Vertikalrichtung verlaufen.

An der Wandung des Tanks oder an der erfindungsgemä-βen Konsole können desweiteren noch ein Filter und ein Kühler angeordnet werden.

Die Erfindung lässt sich allgemein für hydraulisch betätigte Maschinen, bspw. Kunststoff- oder Gummiverarbeitungsmaschinen einsetzen.

Sonstige vorteilhafte Weiterbildungen der Erfindung sind Gegenstand der weiteren Unteransprüche.

Im folgenden wird ein bevorzugtes Ausführungsbeispiel der Erfindung anhand schematischer Zeichnungen näher erläutert. Es zeigen:
Figur 1 eine schematische Seitenansicht eines Druckmittel-Tanks, in dem ein Antrieb einer Pumpe angeordnet ist und
Figur 2 eine Ansicht von rechts auf die Anordnung gemäß Figur 1.

Bei hydraulischen Spritzgießmaschinen werden in der Regel eine Schließeinheit, eine Spritzeinheit und eine Schubschnecke über hydraulische Betätigungselemente betätigt. Die Axialbewegung- der Schließeinheit, der Spritzeinheit und der Schubschnecke werden dabei über Hydraulikzylinder durchgeführt, während die Rotation der Schubschnecke beim Plastifizieren mittels eines Hydromotors eingeleitet wird.

Das Druckmittel zur Druckmittelversorgung der vorgenannten hydraulischen Einrichtungen ist in einem Druckmittel-Tank 1 aufgenommen, der an einem Maschinenfuß 2 der Spritzgießmaschine oder einem Fundament abgestützt ist. Bei dem dargestellten Ausführungsbeispiel besteht der Tank 1 aus mehreren Profilteilen, die miteinander verschraubt oder auf sonstige Weise miteinander verbunden sind. Der dargestellte Tank ist etwa quaderförmig ausgebildet, wobei eine Seitenwandung 4 über einen Stützrahmen 6 an Anlageabschnitten 12 einer Deckwandung bzw. einer Bodenwandung 10 befestigt ist. Bei dem dargestellten Ausführungsbeispiel ist die Seitenwandung 4 aus einem Material mit guten Dämmeigenschaften hergestellt.

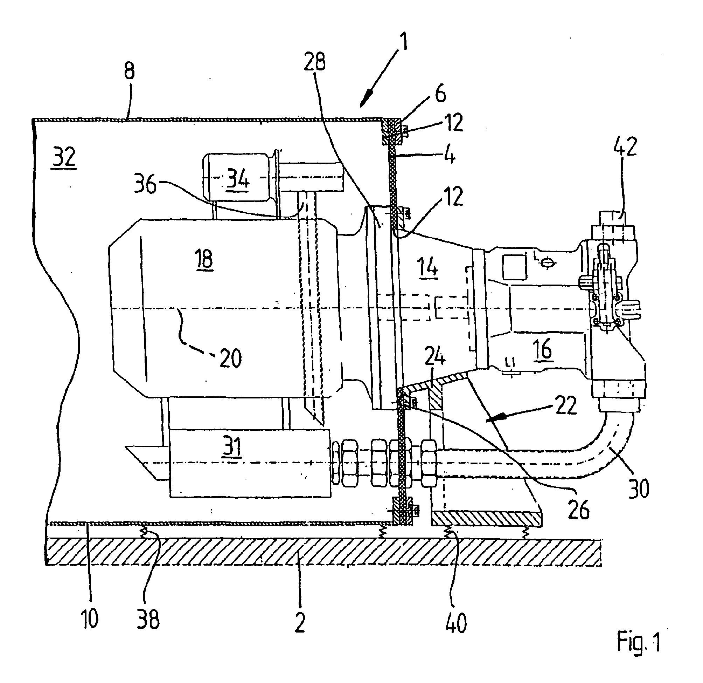

Etwa in der Mitte der Seitenwandung 4 ist eine Ausnehmung 12 ausgebildet, in die ein Kupplungsgehäuse 14 eingesetzt ist. Über dieses Kupplungsgehäuse 14 ist eine Pumpe 16 des hydraulischen Kreislaufes der Spritzgießmaschine mit einem elektrischen Antrieb 18 verbunden. Wie aus der Darstellung gemäß Figur 1 hervorgeht, ist dieser elektrische Antrieb 18 innerhalb des Tanks 1 angeordnet, während das Kupplungsgehäuse 14 mit der daran angeflanschten Pumpe 16 außerhalb des Tanks 1 liegt. Der elektrische Antrieb ist flüssigkeitsgekühlt, vorzugsweise ölgekühlt.

Das erhebliche Gewicht der Einheit aus Pumpe 16, Kupplungsgehäuse 14 und Antrieb 18, deren Achse 20 in der Darstellung gemäß Figur 1 horizontal verläuft, wird über eine Konsole 22 abgestützt. Beim dargestellten Ausführungsbeispiel hat die Konsole 22 einen Stützflansch 24, auf dem das Kupplungsgehäuse 14 abgestützt ist. Der Stützflansch 24 hat einen Flanschring 26, in dem der Antrieb 18 mittels eines Flansches 28 befestigt ist. Gemäß Figur 1 liegt die Seitenwandung 4 zwischen dem Flanschring 26 und dem Flansch 28, so daß bei geeigneter Wahl des Materials der Seitenwandung 4 die direkte Übertragung von Schwingungen vom Gehäuse des Antriebs 18 auf das Kupplungsgehäuse 14 verhindert ist.

Der Sauganschluß der Pumpe ist über eine Saugleitung 30 mit dem Innenraum 32 des Tanks verbunden. Diese Saugleitung 30 durchsetzt die Seitenwandung 4 und ist an dieser mittels geeigneter Rohr- oder Schlauchverbindungen befestigt. Im Mündungsbereich der Saugleitung 30 ist ein Saugpulsationsdämpfer 31 angeordnet, über den die Pulsation der Pumpe im Ansaugbereich gedämpft werden kann.

Gemäß Figur 1 mündet die Saugleitung 30 im unteren Bereich des Druckmittelraums 32.

Auf den Antrieb 18 ist eine Umwälzpumpe 34 eines Kühl- oder Filtermittelkreislaufes aufgesetzt, wobei ein Saugrohr 36 in der Darstellung gemäß der Figur 1 etwa in Vertikalrichtung verläuft, so daß das Druckmittel auch als Kühlmittel verwendet werden kann.

Sowohl die Konsole 22 als auch der Tank 1 sind über Dämpfungselemente 38, 40 am Maschinenfuß 2 abgestützt, so daß vom Antrieb 18 oder der Pumpe 16 erzeugte Schwingungen nicht auf den Maschinenfuß 2 der Spritzgießmaschine und umgekehrt nicht vom Maschinenfuß auf die genannten Bauelemente übertragen wird.

Aufgrund der Abstützung des Gewichts der Pumpe 16, des Kupplungsgehäuses 14 und des Antriebs 8 an der Konsole 22 ist die mechanische Belastung der Seitenwandung 4 minimal, so daß diese im wesentlichen nur im Hinblick auf den im Tank entstehenden Druck ausgelegt werden muß und ansonsten in optimaler Weise an die Dämmaufgabe angepaßt wird.

Die eingangs genannten hydraulischen Aggregate (Hydrozylinder, Hydromotor) der Spritzgießmaschine werden über Rohr- bzw. Schlauchleitungen an einen Druckanschluß 42 der Pumpe 16 angeschlossen.

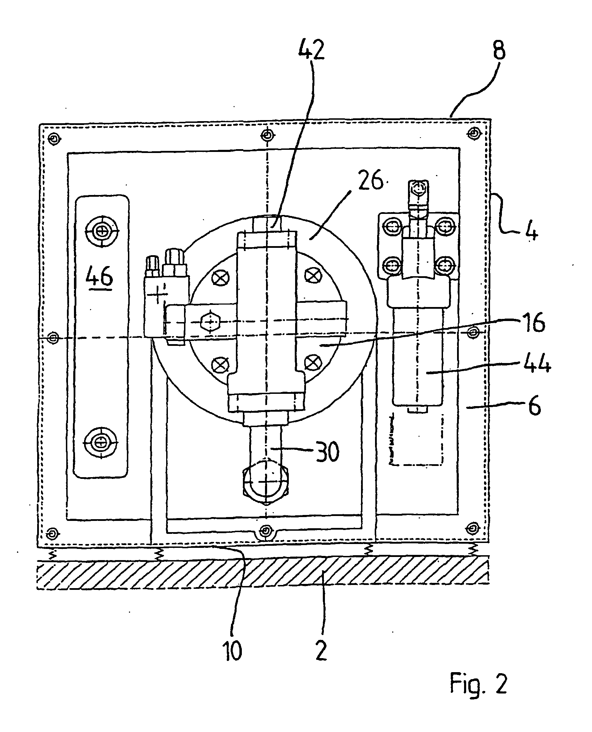

Gemäß der Seitendarstellung der Figur 2 sind seitlich versetzt neben der Pumpe 16 ein Druckmittelfilter 44 und ein Druckmittelkühler 46 angeordnet. Diese sind bei dem dargestellten Ausführungsbeispiel an der Seitenwandung 4 befestigt. Prinzipiell könnten diese Elemente auch an der Konsole 22 festgelegt werden.

Bei dem dargestellten Ausführungsbeispiel ist die Achse 20 der Pumpeneinheit in Horizontalrichtung angeordnet. Bei einer alternativen Ausführungsform könnte die Achse der Pumpeneinheit auch in Vertikalrichtung angeordnet werden, so daß die Pumpe 16 praktisch auf der Deckwandung 8 aufsitzt und über geeignete Stützeinrichtungen am Maschinenfuß 2 abgestützt wird.

Bei dem dargestellten Ausführungsbeispiel wird es bevorzugt, wenn der Antrieb 18 mit seinem öldicht versiegelten Gehäuse innerhalb des im Tank 1 aufgenommenen Druckmittels liegt, so das einerseits eine gute Kühlung gewährleistet ist und andererseits die Geräuschdämmung durch den Ölmantel weiter verringert ist. Die außen angebrachte Pumpe 16 kann mit einem Schallgehäuse abgedeckt werden, so daß die Geräuschemissionen das Aggregats minimal sind.

Selbstverständlich kann der Tank 1 auch anstelle der beim dargestellten Ausführungsbeispiel gewählten Profilelemente auch als Guß- oder Schweißkonstruktion ausgeführt sein. Der Tank kann auch separat, unabhängig vom Maschinenfuß ausgeführt sein.

Offenbart ist ein Hydraulikaggregat für eine Kunststoffverarbeitungsmaschine, insbesondere eine hydraulisch betätigte Spritzgießmaschine. Erfindungsgemäß ist der Antrieb einer Pumpe eines hydraulischen Kreislaufes innerhalb des Tanks vorgesehen, so daß eine optimale Geräusch- und Schwingungsdämmung gewährleistet ist.

### Bezugszeichenliste:

- 1: Druckmittel-Tank
- 2: Maschinenfuß
- 4: Seitenwandung
- 6: Stützrahmen
- 8: Deckwandung
- 10: Bodenwandung
- 12: Ausnehmungen
- 14: Kupplungsgehäuse
- 16: Pumpe
- 18: Antrieb
- 20: Achse
- 22: Konsole
- 24: Stützflansch
- 26: Ringflansch
- 28: Flansch
- 30: Saugleitung
- 31: Saugpulsationsdämpfer
- 32: Druckmittelraum
- 34: Umwälzpumpe
- 36: Saugrohr
- 38: Dämpfungselement
- 40: Dämpfungselement
- 42: Druckanschluß
- 44: Ölfilter
- 46: Ölkühler

## Patentansprüche

1. Hydraulikaggregat für eine Kunststoffverarbeitungsmaschine, deren hydraulische Betätigungselemente, wie bspw. Hydrozylinder oder Hydromotoren über eine Pumpe (16) mit elektrischem Antrieb (18) mit Druckmittel versorgbar sind, das aus einem Tank (1) ansaugbar bzw. in diesen zurückführbar ist, wobei das Hydraulikaggregat den Tank (1), den Antrieb (18) und die Pumpe (16) aufweist, **dadurch gekennzeichnet, daß** der Antrieb (18) der Pumpe (16) im Tank (1) und die Pumpe (16) außerhalb des Tanks (1) angeordnet ist.

2. Hydraulikaggregat nach Patentanspruch 1, wobei der Antrieb (18) zumindest teilweise im Druckmittel angeordnet ist.

3. Hydraulikaggregat nach Patentanspruch 1 oder 2, wobei eine Wandung (4) des Tanks (1) als Dämmwandung ausgeführt ist.

4. Hydraulikaggregat nach einem der vorhergehenden Patentansprüche, wobei im Tank (1) eine Umwälzpumpe (34) für einen Kühl- und/oder Filterkreislauf angeordnet ist.

5. Hydraulikaggregat nach einem der vorhergehenden Patentansprüche, wobei eine Achse (20) des Antriebs (18) und der Pumpe (16) in Horizontal- oder Vertikalrichtung angeordnet ist, so daß die Einheit aus Pumpe (16) und Antrieb (18) eine Seitenwandung (49) bzw. eine Deckwandung (8) des Tanks (1) durchsetzt.

6. Hydraulikaggregat nach Patentanspruch 5, wobei die Wandung (49, 8) einen Ölfilter (44) und/oder einen Ölkühler (46) trägt.

7. Hydraulikaggregat nach einem der vorhergehenden Patentansprüche, wobei der Antrieb (18) druckmittelgekühlt ist und das Druckmittel als Kühlmedium wirkt.

8. Kunststoffverarbeitungsmaschine mit einem Hydraulikaggregat nach einem der vorhergehenden Patentansprüche, wobei der Tank (1) in einem Maschinenfuß (2) der Kunststoffverarbeitungsmaschine angeordnet ist.

9. Kunststoffverarbeitungsmaschine nach Patentanspruch 8, wobei die außerhalb des Tanks (1) angeordnete Pumpe (16) über eine Konsole (22) am Maschinenfuß (2) gelagert ist, an der auch der Antrieb (18) abgestützt ist.

10. Kunststoffverarbeitungsmaschine nach Patentanspruch 9, wobei Tank (1) und Konsole (22) elastisch am Maschinenfuß (2) abgestützt sind.

11. Kunststoffverarbeitungsmaschine nach einem der Patentansprüche 8 bis 10, wobei die Kunststoffverarbeitungsmaschine eine Spritzgießmaschine ist.

## Claims

1. A hydraulic unit for a plastics processing machine, the hydraulic actuating members of which such as, e.g., hydraulic cylinders or hydraulic motors are supplied, via a pump (16) having an electrical drive mechanism (18), with pressure medium drawn from a tank (1) and capable of being recycled into the latter, said hydraulic unit comprising said tank (1), said drive mechanism (18), and said pump (16), **characterized in that** said drive mechanism (18) of said pump (16) is arranged in said tank (1), and said pump (16) is arranged externally of said tank (1).

2. The hydraulic unit in accordance with claim 1, wherein said drive mechanism (18) is at least partly arranged in said pressure medium.

3. The hydraulic unit in accordance with claim 1 or 2, wherein a wall (4) of said tank (1) is designed as an insulating wall.

4. The hydraulic unit in accordance with any one of the preceding claims, wherein a circulating pump (34) for a cooling and/or filtering circuit is arranged inside said tank (1).

5. The hydraulic unit in accordance with any one of the preceding claims, wherein an axis (20) of said drive mechanism (18) and of said pump (16) is arranged in the horizontal or vertical direction, so that the unit comprised of pump (16) and drive mechanism (18) extends through a side wall (49) or through a top wall (8) of said tank (1).

6. The hydraulic unit in accordance with claim 5, wherein said wall (49, 8) carries an oil filter (44) and/or an oil cooler (46).

7. The hydraulic unit in accordance with any one of the preceding claims, wherein said drive mechanism (18) is cooled by pressure medium, and the pressure medium has the function of a coolant.

8. A plastics processing machine comprising a hydraulic unit in accordance with any one of the preceding claims, wherein said tank (1) is arranged in a machine base (2) of said machine.

9. The plastics processing machine in accordance with claim 8, wherein said pump (16) which is arranged externally of said tank (1) is mounted on said machine base (2) through the intermediary of a bracket (22) on which said drive mechanism (18) is furthermore supported.

10. The plastics processing machine in accordance with claim 9, wherein tank (1) and bracket (22) are elastically supported on said machine base (2).

11. The plastics processing machine in accordance with any one of claims 8 to 10, wherein said plastics processing machine is an injection molding machine.

## Revendications

1. Ensemble hydraulique pour une machine de traitement du plastique dont les éléments d'activation hydrauliques tels que, par exemple, des hydrocylindres ou des hydromoteurs peuvent être alimentés à l'aide d'une pompe (16) pourvue d'un mécanisme d'entraînement électrique (18) présentant un moyen de pression, qui peut être aspiré depuis un réservoir (1) ou être recyclé dans celui-ci, l'ensemble hydraulique présentant le réservoir (1), l'entraînement (18) et la pompe (16), **caractérisé en ce que** le mécanisme d'entraînement (18) de la pompe (16) est agencé dans le réservoir (1) et la pompe (16) est agencée en dehors du réservoir (1).

2. Ensemble hydraulique selon la revendication 1, dans lequel le mécanisme d'entraînement (18) est agencé au moins partiellement dans un moyen de pression.

3. Ensemble hydraulique selon la revendication 1 ou 2, dans lequel une paroi (4) du réservoir (1) est réalisée sous la forme d'une paroi barrière.

4. Ensemble hydraulique selon l'une quelconque des revendications précédentes, dans lequel une pompe d'agitation et d'aspiration (34) est agencée pour un circuit de filtration et/ou de refroidissement dans le réservoir (1).

5. Ensemble hydraulique selon l'une quelconque des revendications précédentes, dans lequel un axe (20) du mécanisme d'entraînement (18) et de la pompe (16) est agencé dans la direction horizontale ou verticale de sorte que l'unité composée de la pompe (16) et du mécanisme d'entraînement (18) passe à travers la paroi latérale (49) ou une paroi couvrante (8) du réservoir (1).

6. Ensemble hydraulique selon la revendication 5, dans lequel la paroi (49, 8) supporte un filtre à huile (44) et/ou un refroidisseur d'huile (46).

7. Ensemble hydraulique selon l'une quelconque des revendications précédentes, dans lequel le mécanisme d'entraînement (18) est refroidi par un moyen de pression et le moyen de pression agit comme un moyen de refroidissement.

8. Machine de traitement du plastique présentant un ensemble hydraulique selon l'une quelconque des revendications précédentes, dans laquelle le réservoir (1) est agencé à la base de la machine (2) de traitement du plastique.

9. Machine de traitement du plastique selon la revendication 8, dans laquelle la pompe (16) agencée à l'extérieur du réservoir (1) est positionnée au dessus d'une console (22) située au pied de la machine (2) à laquelle est également appuyé le mécanisme d'entraînement (18).

10. Machine de traitement du plastique selon la revendication 9, dans laquelle le réservoir (1) et la console (22) sont appuyés de façon flexible au pied de la machine (2).

11. Machine de traitement du plastique selon l'une quelconque des revendications 8 à 10, dans laquelle la machine de traitement du plastique est une machine de moulage par injection.
